# EUROPÄISCHE PATENTSCHRIFT

(11) **EP 2 271 454 B1**
(45) Veröffentlichungstag und Bekanntmachung des Hinweises auf die Patenterteilung: **16.03.2016**
(21) Anmeldenummer: 08873677.2
(22) Anmeldetag: 19.11.2008
(51) Int. Cl.: B23D 45/06, B23D 59/00, B27B 5/24, G05B 19/401, B23D 47/08

(54) **VERFAHREN ZUM BETREIBEN EINER WERKZEUGMASCHINE, INSBESONDERE UNTERFLUR TISCHKREISSAGE**
PROCESS FOR OPERATING A MACHINE TOOL, PARTICULARLY UNDER TABLE CIRCULAR SAW
PROCéDé POUR OPéRER UNE MACHINE-OUTIL, EN PARTICULIER UNE SCIE CIRCULAIRE SOUS TABLE

(30) Priorität: 27.03.2008 DE 102008000851
(43) Veröffentlichungstag der Anmeldung: 12.01.2011
(73) Patentinhaber: Robert Bosch GmbH, 70442 Stuttgart (DE)
(72) Erfinder: KRAPF, Reiner, 72770 Reutlingen (DE); STELLMANN, Georg, 71642 Ludwigsburg (DE); HEES, Alexander Werner, 74321 Bietigheim-Bissingen (DE); EGELER, Joachim, 71229 Leonberg (DE)
(86) Internationale Anmeldenummer: PCT/EP2008/065799
(87) Internationale Veröffentlichungsnummer: WO 2009/118063

(56) Entgegenhaltungen:
- EP-A- 1 422 022
- US-A- 4 641 557
- US-A1- 2004 226 424
- US-B1- 7 036 411

## Beschreibung

Die Erfindung betrifft ein Verfahren zum Betreiben einer Werkzeugmaschine, insbesondere eine Unterflur-Tischkreissäge, gemäß dem Oberbegriff des Anspruches 1.

### Stand der Technik

Ein solches Verfahren is aus US 2004/226424 A1 bekannt.

Werkzeugmaschinen mit materialabtragendem Werkzeug sind unter anderem als Kreissägen und Schleifmaschinen, letztere insbesondere in Form von Trennschleifern, im Profi- und Hobbybereich vielfältig eingesetzt. An Arbeitsunfällen in diesen Bereichen sind sie überproportional beteiligt und führen vor allem zu Verletzungen an Gliedmaßen, teilweise sogar zu deren Verstümmelung.

Die Ursachen hierfür sind vielfältig und neben Unachtsamkeit sind hierfür auch unkontrollierte Werkstückbewegungen maßgebend, wie sie sich beim Verkanten des Werkstückes zum Werkzeug oder beim Abrutschen des Werkstückes vom Werkzeug ergeben.

Dem versucht man mit verschiedensten Hilfsvorrichtungen, wie Führungsvorrichtungen oder Schutzvorrichtungen zu begegnen. Beispielsweise bei Tischkreissägen mit einem in Vorschubrichtung des Werkstückes hinter dem Sägeblatt angeordneten, so genannten Spaltkeil sowie auch mit Schutzhauben, die, über das Werkstück abdrängbar, übergreifend zum über die Auflage für das Werkstück überstehenden Teil des Sägeblattes angeordnet sind.

Solche Zusatzeinrichtungen werden im Arbeitsbetrieb teilweise als einschränkend und/oder hinderlich angesehen und daher inaktiviert oder sogar demontiert.

Bei einer aus der US 2004/0226424 A1 bekannten Werkzeugmaschine erfolgt bezogen auf ein jeweiliges Werkstück die sensorische Erfassung von dessen Dicke mit dem Ziel, orientiert an erfassten Dickenänderungen durch bewegte oder unbewegte Objekte, insbesondere Körperteile, über die Sensorik Stellbefehle auszulösen. So beispielsweise das Werkzeug durch Abschalten des Antriebs oder Bremseingriff stillzusetzen und/oder in eine Außereingriffslage zum Werkstück zu verlagern, wobei die sensorische Erfassung unter anderem optisch, akustisch und/oder auf Radarbasis erfolgen kann.

Ferner ist es aus der EP 1 422 022 A1 bekannt, bei insbesondere als Unterflur-Tischkreissägen ausgebildeten Werkzeugmaschinen die Arbeitsumgebung des als Sägeblatt ausgebildeten Werkzeuges daraufhin zu überwachen, ob sich in dieser Arbeitsumgebung Objekte befinden, die - bezogen auf die jeweiligen Arbeitsgegebenheiten zwischen Werkzeug und Werkstück - nach Lage und Geschwindigkeit ein diesen Arbeitsgegebenheiten entsprechendes normales oder nicht entsprechendes, anormales Verhalten zeigen. Hierbei können sensorisch auch materialspezifische Gegebenheiten, wie beispielsweise der Feuchtigkeitsgehalt von Objekten berücksichtigt werden, und es kann so zwischen lebendem und totem Material unterschieden werden. Werden für die Arbeitssicherheit kritische Gegebenheiten detektiert, so kann dem durch Eingriff in den Antrieb des Werkzeuges und/oder dadurch Rechnung getragen werden, dass das Werkzeug aus seiner Eingriffslage zum Werkstück zurückgezogen wird.

Den Zugriff auf die Arbeitsumgebung beeinträchtigende und/oder im Arbeitsbetrieb hinderliche Einrichtungen können so zumindest weitgehend vermieden werden.

### Offenbarung der Erfindung

Der Erfindung liegt die Aufgabe zugrunde, bei Werkzeugmaschinen, insbesondere Unterflur-Tischkreissägen, auf besonders einfache Weise einen effektiven Arbeitsschutz ohne im Arbeitsbetrieb teilweise hinderliche Zusatzeinrichtungen zu realisieren.

Diese Aufgabe wird erfindungsgemäß mit den Merkmalen des Anspruches 1 gelöst. Die Unteransprüche geben zweckmäßige Weiterbildungen an.

Die Erfindung geht, wie schon bei den vorbekannten Lösungen, von der Grundüberlegung aus, dass eine ernsthafte Verletzung oder gar eine Verstümmelung durch das Werkzeug nur dann möglich ist, wenn ein entsprechend freier Zugriff auf das Werkzeug gegeben ist. Um dies zu verhindern, wird bei der Erfindung das Werkstück als Abschirmung für das Werkzeug dadurch genutzt, dass der über das Werkstück hinausragende Teil des Arbeitsbereiches des Werkzeuges eine radiale Höhe aufweist, die nur einen Bruchteil der radialen Höhe des materialabtragend ausgebildeten Ringbereiches ausmacht.

Es bildet somit über weite Bereiche des Arbeitsbetriebes das Werkstück praktisch eine Schutzabdeckung für das Werkzeug, über die das Werkzeug, beispielsweise in Form eines Sägeblattes oder einer Trennscheibe, auf der zur Auflage abgewandten Seite nur einen geringen Überstand aufweist, der so bemessen sein kann, dass auftreffende Gliedmaßen im Wesentlichen nur oberflächlich geschädigt werden können.

Der Überstand des Werkzeuges zum Werkstück liegt in der unteren Grenze bei 2 mm, kann nach oben, insbesondere in Berücksichtigung des Verlaufes der Kontur des Werkstückes über der Vorschubrichtung, abschnittsweise aber deutlich größere Werte erreichen. Bevorzugt ist ein oberer Grenzbereich von etwa 10 mm vorgesehen, auch in Berücksichtigung der Zahnhöhe des jeweiligen Werkzeuges.

Realisieren lässt sich eine derartige Lösung konstruktiv und bei gleich bleibender, durch die Höhe der Auflage bestimmter Höhe der Arbeitsebene bevorzugt dadurch, dass das Werkzeug gegenüber der Auflage verstellt wird.

Grundsätzlich kann hierfür die Höhenverstellung des Werkzeuges quer zur Auflage linear oder auch schwenkbar erfolgen. Dies in Berücksichtigung dessen, dass das Werkzeug im Sinne der angestrebten Arbeitssicherheit außerhalb seiner Zugriffslage auf ein Werkstück, insbesondere in seiner jeweiligen Ausgangslage für einen Arbeitsvorgang und/oder in seiner Ruhelage, auf ein Niveau zur Auflage abgesenkt ist, bei dem allenfalls ein kleiner Überstand über die Auflage gegeben ist, oder auch eine Absenkung bis unter die Auflageebene.

Insbesondere erweist sich eine schwenkbare Verstellung des Werkzeuges in Hochrichtung als vorteilhaft, und zwar bevorzugt längs einer Schwenk- oder Führungsbahn, die in Vorschubrichtung des Werkstückes in Richtung auf das Werkzeug ansteigt und die einen im Bereich der Werkstückauflage liegenden Schwenkpol aufweist. Durch eine solche Lösung, bei der bevorzugt die Schwenkbahn einen zum Radius des Werkzeuges etwa entsprechenden, in der Größe gegebenenfalls auch variablen Polabstand aufweist und der Schwenkpol zumindest in Annäherung, bezogen auf die Vorschubrichtung des Werkstückes, im Berührpunkt des Werkstückes zum Werkzeug liegt, lässt sich weiter ein besonders gleichmäßiger Sägevorgang erreichen.

Insbesondere diesbezüglich erweist es sich auch als zweckmäßig, wenn ergänzend zur sensorischen Erfassung der Höhe des Werkstückes eine sensorische Erfassung der Vorschubgeschwindigkeit des Werkstückes, gegebenenfalls auch der Positionierung des Werkstückes zum Werkzeug bezogen auf die Vorschubrichtung vorgesehen wird, wobei in Verbindung mit der Erfassung der Vorschubgeschwindigkeit bei Führung des

In Verbindung mit der sensorischen Erfassung der Höhe des Werkstückes und der Vorschubgeschwindigkeit, gegebenenfalls auch der Lage des Werkstückes, ist über eine bevorzugt zentrale Steuereinheit eine Aktuatorik für die Höhenverstellung des Werkzeuges oder der Auflage anzusteuern, wobei diese Höhenverstellung elektromotorisch, gegebenenfalls aber auch fluidisch erfolgen kann.

Zweckmäßigerweise kann auch eine Sicherheitssensorik zur Erkennung menschlichen Gewebes im näheren Umfeld des Werkzeuges Verwendung finden, wobei auch deren Signale über die Steuereinheit verarbeitet und zur Ansteuerung einer Aktuatorik genutzt werden können, über die das Werkzeug schlagartig in seine Ausgangslage zur Auflage verfahren wird. Grundsätzlich kann hierzu die Aktuatorik Verwendung finden, die für die Höhenverstellung eingesetzt ist, es kann aber auch eine gesonderte Aktuatorik Verwendung finden, sei es in Form einer mechanisch oder fluidisch vorgespannten Aktuatorik oder auch einer anderweitigen Motorik. In Verbindung mit der Einleitung von Schutzmaßnahmen kann über die Sicherheitssensorik auch der Antrieb für das Werkzeug abgeschaltet werden, bevorzugt in Verbindung mit einem schlagartigen Abbremsen des Werkzeuges über dessen Antrieb oder über eine separate Bremsvorrichtung.

Somit lässt sich mit der Werkzeugmaschine auch ein Arbeitsbetrieb realisieren, bei dem die Höhenlage des Werkzeuges zur Auflage für das Werkstück in Abhängigkeit von der Höhe des Werkstückes im Zugriffsbereich des Werkzeuges auf das Werkstück verstellt wird und dies auch in Abhängigkeit von der Vorschubgeschwindigkeit des Werkstückes, so dass in Verbindung mit der sensorischen Erkennung menschlichen Gewebes im Zugriffsbereich auf das Werkzeug ein besonders hoher Sicherheitsstandard erreicht wird.

Bevorzugt erfolgt die Anordnung eines Sensors in Vorschubrichtung des Werkstückes auf das Werkzeug nahe dem Werkzeug sowie im Bereich der Auflage, insbesondere angrenzend an die Auflageebene, wobei über diesen Sensor sowohl die jeweilige Höhe des Werkstückes im Zugriffsbereich des Werkzeuges wie auch die jeweilige Vorschubgeschwindigkeit, und gegebenenfalls auch die Lage des Werkstückes erfasst werden kann. Separat, aber auch integriert in diesen Sensor kann der zur Erfassung menschlichen Gewebes dienende Sensor vorgesehen werden, wobei als Sensoren insbesondere optisch oder akustisch arbeitende Sensoren wie auch auf Basis von Radar arbeitende Sensoren Anwendung finden.

Weitere Vorteile und zweckmäßige Ausführungen sind den Ansprüchen, der Figurenbeschreibung und den Zeichnungen zu entnehmen. Es zeigen:
- Fig. 1: im Schema eine Werkzeugmaschine in der Ausgestaltung als Tischkreissäge mit einem Sägeblatt als Werkzeug und einer Aktuatorik zur Verstellung des Werkzeuges in Hochrichtung gegenüber der Auflage für ein Werkstück,
- Fig. 2: im Schema ein zentraler Ausschnitt aus Fig. 1 in Draufsicht auf das als Sägeblatt ausgebildete Werkzeug, wobei in Vorschubrichtung eines nicht dargestellten Werkstücks auf das durch das Sägeblatt gebildete Werkzeug diesem vorgelagert eine im Bereich der Auflage angeordnete Sensorik veranschaulicht ist,
- Fig. 3: eine der Fig. 1 entsprechende Grundanordnung, in der eine Schnellverstellung des Werkzeugs aus dessen Arbeitslage in eine gegen die Auflage zurückgezogene oder in die Auflage versenkte Betriebs- oder Ruhelage dargestellt ist,
- Fig. 4: eine schematische Darstellung des Werkzeugs in verschiedenen Höhenlagen relativ zu einem Werkstück bei linearer Verstellung des Werkzeuges in Hochrichtung,
- Fig. 5: eine der Fig. 4 entsprechende Darstellung bei schwenkbeweglicher Verstellung des Werkzeuges relativ zum Werkstück,
- Fig. 6: eine weitere schematisierte Darstellung bei zum Werkstück in Eingriff stehendem, durch ein Sägeblatt gebildeten Werkzeug und bei Verkantung des Werkstückes gegenüber dem Werkzeug sowie dadurch im hinteren Bereich des Sägeblattes von diesem auf das Werkstück ausgeübter Kraft, und
- Fig. 7: in schematischer Darstellung die erfindungsgemäß teilweise optional vorgesehenen Sensoriken im Zusammenwirken mit einer Steuereinheit und über diese angesteuerten Aktuatoriken für die Höhenverstellung und die Schnellabsenkung des Werkzeuges.

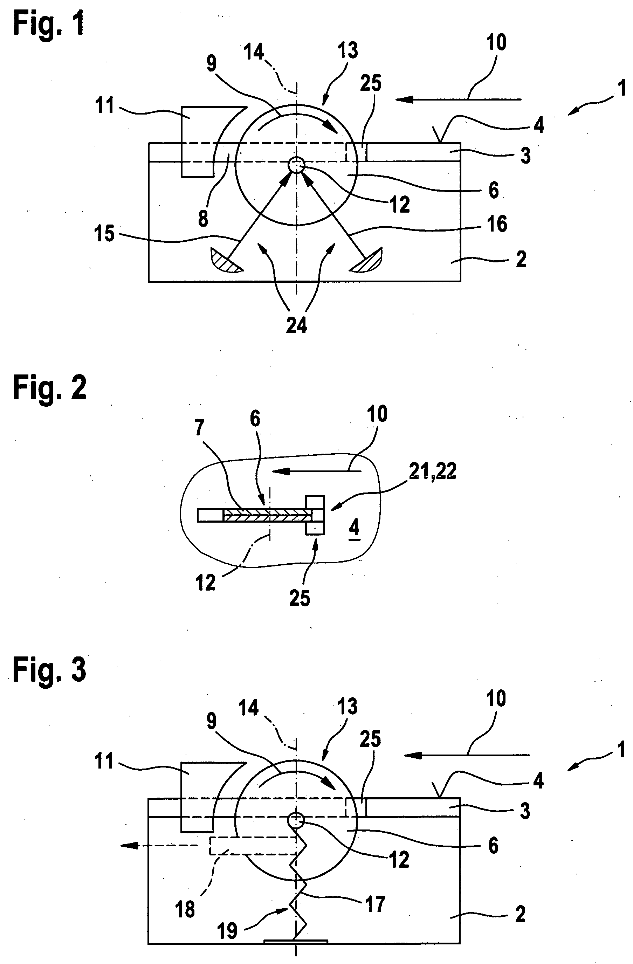

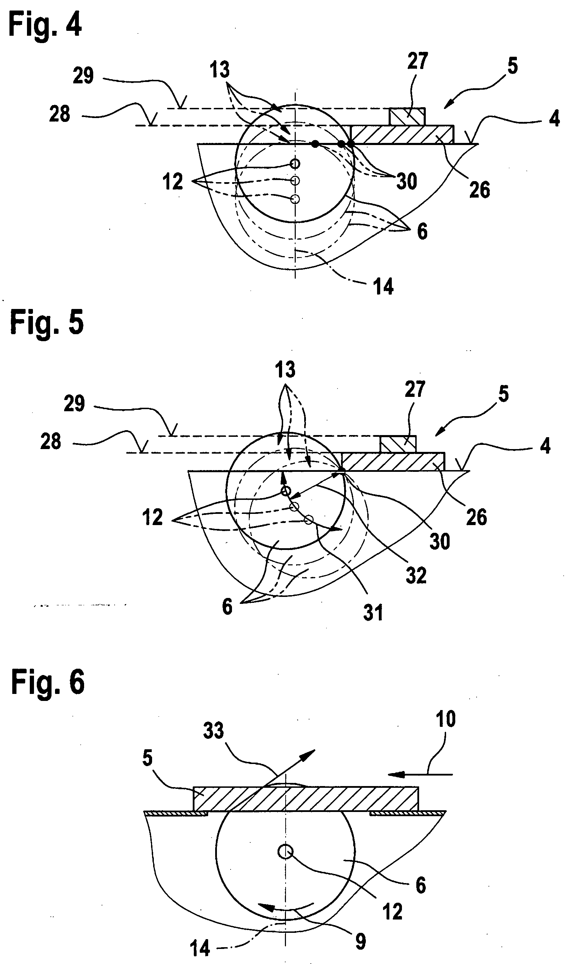

In den Fig. 1 bis 3 ist als Beispiel einer erfindungsgemäß gestalteten Werkzeugmaschine eine Unterflur-Tischkreissäge 1 in ihrem Grundaufbau veranschaulicht. Die Tischkreissäge 1 weist einen Unterbau 2 auf, dem als obere Abdeckung eine Tischplatte 3 zugeordnet ist, durch die eine Auflage 4 für ein in den Fig. 4 bis 6 veranschaulichtes Werkstück 5 gebildet ist. Als Werkzeug 6 ist ein Kreissägeblatt vorgesehen, das, wie in Fig. 2 angedeutet, eine umfangsseitige Verzahnung 7 als umfangsseitig materialabtragend ausgebildeten Ringbereich aufweist. Das Werkzeug 6 durchsetzt die Tischplatte 3 und die durch diese gebildete Auflage 4 in einem Arbeitsspalt 8, der sich ebenenparallel zum Werkzeug 6 erstreckt und ausreichenden Freigang für das Werkzeug 6 lässt.

Die Drehrichtung des im Ausführungsbeispiel durch ein Kreissägeblatt gebildeten Werkzeuges 6 ist mit 9 angegeben, und die Vorschubrichtung des in den Fig. 1 bis 3 nicht dargestellten Werkstückes mit 10. Ebenenparallel zum Werkzeug 6 ist ein so genannter Spaltkeil 11 vorgesehen, der, was nicht dargestellt ist, nach Durchlauf des Werkstückes 5 durch das Werkzeug 6 in den durch das Werkzeug 6 geschaffenen Arbeitsspalt, im Falle eines Kreissägeblattes als Werkzeug 6 also in den entsprechenden Sägespalt eingreift. Der Spaltkeil 11 dient der verkantungsfreien Querführung des in Vorschubrichtung 10 über das Werkzeug 6 hinausragenden Teiles des Werkstückes 5.

Fig. 1 und 3 veranschaulichen die Verstellbarkeit des motorisch um eine Achse 12 rotierend angetriebenen Werkzeuges 6 in Hochrichtung. Durch die Verstellung des Werkzeuges 6 in Hochrichtung lässt sich die Höhe des über die Auflage 4 hinausragenden, durch ein Segment des kreisförmigen Werkzeuges 6 gebildeten Arbeitsbereiches 13 bestimmen, mit dem das Werkzeug 6 auf das jeweilige Werkstück 5 zugreift.

Die Verstellung des Werkzeuges 6 in Hochrichtung ist in Fig. 1 durch winklig, insbesondere symmetrisch zu einer zur Auflage 4 senkrechten Hochachse 14 angestellte Aktuatoren 15, 16 veranschaulicht, die sowohl eine lineare Verstellung wie auch eine Verstellung längs einer vorgegebenen Kurvenbahn, wie beispielsweise anhand von Fig. 5 erläutert, ermöglichen. Ist nur eine lineare Verstellung angestrebt, so kann auch mit nur einem in Stellrichtung sich erstreckenden Aktuator bearbeitet werden. Über einen solchen Aktuator, oder die in Fig. 1 gezeigte Anordnung von Aktuatoren 15, 16 kann, bei entsprechender Gestaltung der Aktuatoren, nicht nur die jeweilige Eingriffstiefe des Werkzeuges 6 auf das zugehörige Werkstück 5 eingestellt werden, sondern es ist bei entsprechend schnell ansprechenden Aktuatoren auch möglich, das Werkzeug 6 aus seiner jeweiligen Arbeitslage ,wie sie beispielsweise in Fig. 1 veranschaulicht ist, nahezu schlagartig in eine Lage abzusenken, in der das Werkzeug 6 auf oder unter die Auflage 4 abgesenkt ist, wie dies beispielsweise aus Sicherheitsgründen bei Erkennen verletzungsrelevanter Taktbestände zweckmäßig ist.

Eine diesbezügliche weitere Möglichkeit zur Schnellabsenkung zeigt Fig. 3, die im Grundaufbau der Darstellung gemäß Fig. 1 entspricht und bei der zur Schnellabsenkung aus einer vorherigen Arbeitslage eine Federanordnung 17 vorgesehen ist, die im normalen Arbeitsbetrieb, symbolisiert durch einen Sicherheitsbolzen 18, blockiert ist und die nur bei erkannten Sicherheitsrisiken freigeschaltet wird. Eine solche durch die Federanordnung 17 gebildete Aktuatorik 19 kann beispielsweise auch ergänzend zu einer Aktuatorik 24 vorgesehen werden, wie sie in Fig. 1 gezeigt und zu Fig. 1 beschrieben ist und über die eine Verstellung des Werkzeuges 6 in Hochrichtung gegen das jeweilige Werkstück 5, und bezogen auf seine jeweilige Höhenlage zum Werkstück 5 vorgenommen wird. In einem solchen Fall kann eine der Schnellabsenkung dienende Aktuatorik 19 beispielsweise dadurch wirksam geschaltet werden, dass die durch die Aktuatoren 15, 16 gebildete Aktuatorik 24 auf Leerlauf oder Freigang geschaltet wird.

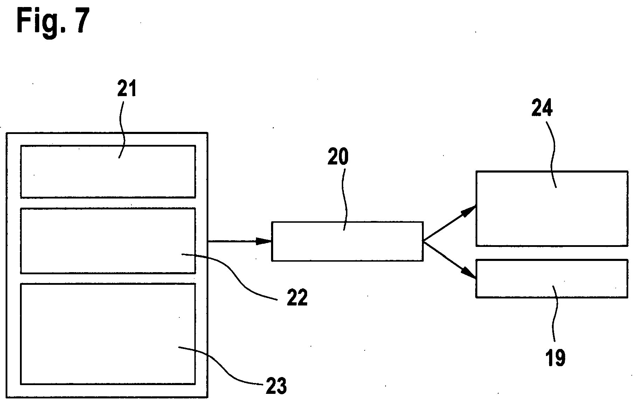

Nicht dargestellt ist in den Fig. 1 bis 3 die Ansteuerung der jeweiligen Aktuatoren 15, 16 bzw. Aktuatoriken 19, 24 über eine Steuereinheit 20 in Abhängigkeit von einer sensorischen Erfassung der jeweiligen Arbeitsgegebenheiten. Die sensorische Erfassung kann beispielsweise über einen Sensor 21 zur Erfassung der jeweiligen Höhe des Werkstückes 5 im Zugriffsbereich des Werkzeuges 6, einen Sensor 22 zur Erfassung der Vorschubgeschwindigkeit und/oder Lage des Werkstückes 5 und einen Sensor 23 zur Erkennung menschlichen Gewebes im Nahbereich des Werkzeuges 6 erfolgen. Dies ist in Fig. 7 schematisiert veranschaulicht, wobei die durch die Aktuatoren 15, 16 beispielsweise veranschaulichte Aktuatorik mit 24 bezeichnet ist, und mit 19 die Aktuatorik für die Schnellabsenkung.

Im Sinne der Grundfunktion der Höhenverstellung des Werkzeuges 6 abgestimmt auf die jeweilige Höhe des Werkstückes 5 im Zugriffsbereich des Werkzeuges 6 erfolgt über den Sensor 21, bevorzugt in Verbindung mit dem Sensor 22, nach entsprechender Signalverarbeitung in der Steuereinheit 20 die Ansteuerung der Aktuatorik 24. Hierzu ist es zweckmäßig, die diesbezüglichen Sensoren 21 und 22 funktional zusammenzufassen und bevorzugt, wie in den Fig. 1 und 3 veranschaulicht, in einem Bereich 25 der Tischplatte 3 zu positionieren, der im Zugriffsbereich des Werkzeuges 6 auf das in Vorschubrichtung 10 gegen das Werkzeug 6 herangeführte-Werkstück 5 liegt. In Fig. 2 sind die Sensoren 21 und 22 im Bereich 25 zusammengefasst dargestellt, im Rahmen der Erfindung liegt aber auch eine getrennte Anordnung, wobei die Erfassung der Vorschubgeschwindigkeit und der Lage des Werkstückes 5 für das Arbeiten mit der erfindungsgemäßen Werkzeugmaschine zweckmäßig, aber nicht zwingend ist.

Eine entsprechende Anordnung des Sensors 23 in dem Bereich 25 ist ebenfalls möglich. Im Rahmen der Erfindung liegt es aber auch, mehrere Sensoren 23 zur Erkennung von menschlichem Gewebe im Zugriffsbereich des Werkzeuges 6 vorzusehen, wobei eine diesbezügliche Möglichkeit darin besteht, einen solchen Sensor 23 beispielsweise am Spaltkeil 11 anzuordnen oder auch in in Abhängigkeit von der jeweiligen Arbeit jeweils wählbaren Bereichen der Werkzeugmaschine.

Figuren 4 bis,6 veranschaulichen die erfindungsgemäß vorgesehene relative Verstellbarkeit zwischen Werkzeug 6 und Auflage 4 in Hochrichtung in Abhängigkeit von der jeweiligen Höhe des Werkstückes 5 im Zugriffsbereich des Werkzeuges 6 während des Arbeitsbetriebes. Durch diese Verstellbarkeit sind das Werkzeug 6 und die Auflage 4 auf eine Höhenlage zueinander einstellbar, die der jeweiligen Höhe des Werkstückes 5 im Zugriffsbereich des Werkzeuges 6 nahezu entspricht. Bevorzugt ist ein Überstand des Werkzeuges 6 über die jeweilige Höhe des Werkstücks vorgesehen, der in der unteren Grenze bei 2 mm und der in der oberen Grenze bei etwa 10 mm liegt.

Die Darstellungen in den Figuren 4 bis 6 gehen von einer Höhenverstellbarkeit des Werkzeuges 6 gegenüber der Auflage 4 aus, wobei in den Figuren 4 und 5 ein über dem Vorschubweg unterschiedlicher Höhenverlauf für das Werkstück 5 gezeigt ist, das einen unteren Werkstückteil 26 und einen abschnittsweise darüber liegenden oberen Werkstückteil 27 aufweist.

Ausgangspunkt ist in den Figuren 4 und 5 eine Betriebslage des als Werkzeug 6 vorgesehenen Kreissägeblattes, bei der dieses in Hochrichtung die Auflage 4 nahezu tangiert, im gezeigten Ausführungsbeispiel mit seinem Arbeitsbereich 13 geringfügig über die Auflage 4 vorsteht. Entsprechend der sensorisch erkannten Höhe des unteren, in Vorschubrichtung 10 gegenüber dem oberen Werkstückteil 27 vorstehenden Werkstückteil 26 wird das Werkzeug 6 linear quer zur Auflage 4 auf ein Niveau angehoben, bei dem ein größeres Segment des Werkstückes 3 als Arbeitsbereich über die Auflage 4 vorsteht und zur Oberseite des unteren Werkstückteiles 26 eine Höhenlage einnimmt, in der nur ein geringer Überstand zur Oberseite 28 des unteren Werkstückteiles 26 gegeben ist. Dadurch wird das Werkstück 5 beim Vorschub gegen das Werkzeug 6 zwar über die volle Höhe durchsägt, es ist zum durchsägten Teil aber nur ein Überstand in Hochrichtung gegeben, wie er im Hinblick auf die volle Durchtrennung erforderlich ist. Damit ist über das Werkstück 5 das Werkzeug 6 im Arbeitsbetrieb soweit abgedeckt, dass Berührungen zum Werkzeug 6, beispielsweise über den Benutzer, letztlich nur oberflächliche Verletzungen zur Folge haben können, da der Überstand des Werkzeuges 6 zum Werkstück 5 entsprechend klein ist, so beispielsweise im Bereich von wenigen Millimetern liegt.

Wird nicht nur die Höhe des Werkstückes 5 jeweils erfasst, sondern auch dessen Vorschublage und bevorzugt auch dessen Vorschubgeschwindigkeit, so kann die Höhenverstellung dahingehend gesteuert erfolgen, dass das Werkzeug 6 entsprechend der Dicke des jeweils in Überdeckung zum Werkzeug 6 liegenden Werkstückes 5 in seiner Höhe verstellt wird. Dadurch ist schon ausgehend von der Grundstellung des Werkzeuges 6 mit sehr geringem Überstand seines Arbeitsbereiches 13 zur Auflage 4 beim Heranführen des Werkstückes 5 an das Werkzeug 6 für dieses eine weitgehende Abdeckung über das Werkstück 5 erreicht. Kommt im Rahmen des weiteren Vorschubs des Werkstückes 5 in Vorschubrichtung 10 der obere Werkstückteil 27 in den Zugriffsbereich des Werkzeuges 6, so wird dieses entsprechend der vorbeschriebenen Arbeitsweise so weit in Hochrichtung versetzt, dass sich zur Oberseite 29 des oberen Werkstückteiles 27 wiederum nur eine geringe Überschneidung und damit ein geringer Überstand ergibt. Eine entsprechende Höhenanpassung findet auch bei weiterem Versatz des Werkstückes 5 in Vorschubrichtung 10 statt, nunmehr allerdings entsprechend der abfallenden Werkstückkontur in entgegengesetzter Richtung, so dass über den ganzen Arbeitsbetrieb hin eine weitgehende Überdeckung des Werkzeuges 6 durch das Werkstück 5 gegeben ist.

Die lineare Verstellung des Werkzeuges 6 in Hochrichtung quer zur Auflage 4 hat eine Verlagerung des Ansatzpunktes 30 zwischen Werkstück 5 und Werkzeug 6 in Abhängigkeit von der Höhenlage des Werkzeuges 6 zur Folge. Dies kann zu ruckartigen Beaufschlagungen des Werkstückes 5 durch das Werkzeug 6 führen, die die Führung des Werkstückes 5 durch den Benutzer erschweren und damit auch das Arbeitsergebnis beeinträchtigen können.

Dem wird bei einer Verstellung des Werkzeuges 6 in seiner Höhenlage zur Auflage 4 bei einer Ausgestaltung-gemäß Fig. 5 dadurch begegnet, dass das Werkzeug 6 längs einer kreisförmigen Führungs- oder bogenförmigen Schwenkbahn 31 verschwenkbar geführt ist, derart, dass der Ansatzpunkt 30 den im Bereich der Werkstückauflage 4 liegenden Pol für die Führungs- oder Schwenkbahn 31 bildet. Die Schwenk- oder Führungsbahn 31 weist somit zum Ansatzpunkt 30 als Schwenkpol einen dem Radius 32 des Werkzeuges 6 entsprechenden oder annähernd entsprechenden Polabstand auf. Auch bei dieser Ausführungsform erfolgt, nunmehr aber entlang der Führungs- oder Schwenkbahn 31, die Höhenverstellung analog zur Ausgestaltung gemäß Fig. 4, so dass auf die diesbezüglichen Ausführungen verwiesen werden kann.

Durch das wenigstens näherungsweise Zusammenfallen von Ansatzpunkt 30 und Schwenkpol bleibt die Lage des Ansatzpunktes 30 des Werkzeuges 6 am Werkstück 5 unabhängig von der Höhenlage des Werkzeuges 6 zumindest angenähert gleich, etwa auf Höhe der Auflage 4, und es ergibt sich eine Vergleichmäßigung des Arbeitsablaufes mit entsprechenden Vorteilen hinsichtlich der Führung durch den Benutzer und für die Güte des Arbeitsergebnisses.

Die Schwenkbahn 31 kann grundsätzlich durch eine Führungsschiene oder dergleichen gebildet sein. Eine entsprechende Schwenkbahn lässt sich aber auch in freier Führung über Stellelemente, wie beispielsweise in ihrer Anordnung in Fig. 1 gezeigte Aktuatoren 15, 16 erreichen. Erfindungsgemäß ist zweckmäßigerweise zu berücksichtigen, dass durch die radiale Führung des Werkzeuges 6 der Verfahrweg entlang einer Führungsbahn oder Schwenkbahn 31, also mit einem Radius 32, nicht mehr 1:1 der zu verfahrenden, sensorisch erfassten Höhe entspricht. Deshalb ist es zweckmäßig, wenn die Steuereinheit 20 diese radiale Abhängigkeit als Kennlinie gespeichert hält, um die jeweils vorgegebene Höhenverstellung korrekt auf den längs der Führungsbahn oder Schwenkbahn 31 nötigen Verfahrweg umzurechnen.

Fig. 6 veranschaulicht, dass die erfindungsgemäß vorgegebene Arbeitsweise mit jeweils nur sehr geringem Überstand des Werkzeuges 6 über das Werkstück 5 sich auch hinsichtlich der Führung des Werkstückes durch den Benutzer als vorteilhaft erweist, da die Hinterseite des Werkzeuges 6, so insbesondere eines Sägeblattes, im Falle eines Verkantens zum Werkstück 5, also z.B. gegenüber einem zu schneidenden Holzstück, das Werkstück 5 im Wesentlichen entgegengerichtet zur Vorschubrichtung 10 beaufschlagt. Dies ist durch den tangential zum Werkzeug 6 im Überdeckungsbereich zum Werkstück 5 verlaufenden Kraftvektor 33 angedeutet und ermöglicht eine schnelle Reaktion des Benutzers, da dieser das Werkstück 5 ohnehin in Richtung auf das Werkzeug 6 verschiebt und somit schnell eine Gegenkraft aufbauen kann. Demgegenüber ergibt sich bei einem größeren Überstand des Werkzeuges 6 über das Werkstück 5 eine weitgehend aufrechte Erstreckung des Kraftvektors, die schon auf Grund der gegebenen Hebelwirkungen vom Benutzer schlechter zu beherrschen ist.

Finden im Rahmen der erfindungsgemäßen Lösung zusätzliche Schutzabdeckungen Verwendung, so können diese zwar zur weiteren Erhöhung der Benutzersicherheit beitragen, gleichzeitig aber in ihren Abmessungen so klein gehalten werden, dass zumindest größere Beeinträchtigungen für den Benutzer damit nicht mehr verbunden sind.

Die erfindungsgemäß vorgesehene Steuereinheit 20 kann über die aufgezeigten Möglichkeiten hinausgehend auch dazu genutzt werden, für das Werkzeug 6 im Gefahrenfall ggf. den motorischen Antrieb zu unterbrechen oder abzuschalten.

Zur sensorischen Erfassung finden bevorzugt Sensoren Verwendung, die beispielsweise als optische Sensoren auf Infrarotbasis oder mit Laserlicht oder als akustische Sensoren mit Ultraschall arbeiten. Ferner sind auch auf Radarbasis arbeitende Sensoren, wie zum Beispiel UWB, (PN oder stepped frequency), Doppler oder sonstige Sensoren mit Vorteil einzusetzen.

## Patentansprüche

1. Verfahren zum Betreiben einer Werkzeugmaschine, insbesondere Unterflur-Tischkreissäge (1), mit motorischem Antrieb, mit einer Auflage (4) für ein Werkstück (5) und mit in einem umfangsseitigen Ringbereich (7) materialabtragend ausgebildetem, im Arbeitsbetrieb rotierenden Werkzeug (6), bei der das Werkzeug (6) und die Auflage (4) in quer zur Auflage (4) verlaufender Hochrichtung gegeneinander verstellbar sind und bei der das Werkzeug (6) in seiner auf das Werkstück (5) zugreifenden Arbeitslage einen über die Auflage (4) hinausragenden Arbeitsbereich (13) aufweist, wobei das Werkzeug (6) und die Auflage (4) im Arbeitsbetrieb in Hochrichtung in Abhängigkeit von der jeweiligen Höhe des Werkstückes (5) im Zugriffsbereich des Werkzeuges (6) sensorisch gesteuert motorisch gegeneinander verstellbar und auf eine Lage zueinander einstellbar sind, die der jeweiligen Höhe des Werkstückes (5) im Zugriffsbereich des Werkzeuges (6) nahezu entspricht, **dadurch gekennzeichnet, dass** der über das Werkstück (6) hinausragende Teil des Arbeitsbereiches (13) eine radiale Höhe aufweist, die einen Bruchteil der radialen Höhe des Ringbereiches (7) ausmacht.

2. Verfahren nach Anspruch 1, **dadurch gekennzeichnet, dass** der Ringbereich (7) als Verzahnungsbereich (7) ausgebildet ist.

3. Verfahren nach Anspruch 1 oder 2, **dadurch gekennzeichnet, dass** die radiale Höhe des über das Werkstück (6) hinausragenden Teiles des Arbeitsbereiches in der unteren Grenze bei 2 mm und in der oberen Grenze bei etwa 10 mm liegt.

4. Verfahren nach einem der Ansprüche 1 bis 3, **dadurch gekennzeichnet, dass** das Werkzeug (6) längs einer Führungs- oder Schwenkbahn (31) verschwenkbar geführt ist, die einen im Bereich der Werkstückauflage (4) liegenden Schwenkpol aufweist.

5. Verfahren nach Anspruch 4, **dadurch gekennzeichnet, dass** die Schwenkbahn (31) zum Schwenkpol einen dem Radius (32) des Werkzeuges (6) zumindest angenäherten Polabstand aufweist und dass der Schwenkpol zumindest in Annäherung im Ansatzpunkt (30) des Werkzeuges (6) zum Werkstück (5) liegt.

6. Verfahren nach Anspruch 1, **dadurch gekennzeichnet, dass** die Verstellung des Werkzeuges (6) in Hochrichtung in Abhängigkeit von der sensorisch erfassten Vorschubgeschwindigkeit des Werkzeuges (5) gesteuert ist.

## Claims

1. Method for operating a power tool, in particular an underfloor circular-saw bench (1), with a motor drive, with a support (4) for a workpiece (5) and with a tool insert (6) that is designed for removing material in a circumferential annular area (7) and in the working mode rotates, in which the tool insert (6) and the support (4) are adjustable with respect to one another in the vertical direction extending transversely in relation to the support (4) and in which the tool insert (6) has in its working position, in which it accesses the workpiece (5), a working area (13) that extends beyond the support (4), wherein, in the working mode, the tool insert (6) and the support (4) are adjustable with respect to one another in a motorized manner under sensor control in the vertical direction in dependence on the respective height of the workpiece (5) in the access area of the tool insert (6) and can be set in relation to one another to a position that corresponds virtually to the respective height of the workpiece (5) in the access area of the tool insert (6), **characterized in that** the part of the working area (13) that extends beyond the workpiece (6) has a radial height that makes up a fraction of the radial height of the annular area (7).

2. Method according to Claim 1, **characterized in that** the annular area (7) is formed as a toothing area (7).

3. Method according to Claim 1 or 2, **characterized in that** the radial height of the part of the working area that extends beyond the workpiece (6) lies in the lower limit at 2 mm and in the upper limit at approximately 10 mm.

4. Method according to one of Claims 1 to 3, **characterized in that** the tool insert (6) is guided pivotably along a guiding or pivoting path (31), which has a pivoting pole lying in the region of the workpiece support (4).

5. Method according to Claim 4, **characterized in that** the pivoting path (31) has a pole spacing with respect to the pivoting pole that is at least approximated to the radius (32) of the tool insert (6) and **in that** the pivoting pole lies at least in approximation at the point of engagement (30) of the tool insert (6) with respect to the workpiece (5).

6. Method according to Claim 1, **characterized in that** the adjustment of the tool insert (6) in the vertical direction is controlled in dependence on the sensor-detected advancing rate of the tool insert (5).

## Revendications

1. Procédé pour utiliser une machine-outil, en particulier une scie circulaire sous table (1), avec un entraînement motorisé, avec un plan de dépôt (4) pour une pièce (5) et avec un outil (6) tournant en fonctionnement de travail, configuré pour l'enlèvement de matière dans une région annulaire périphérique (7), dans laquelle l'outil (6) et le plan de dépôt (4) sont réglables l'un par rapport à l'autre dans une direction verticale s'étendant transversalement au plan de dépôt (4) et dans laquelle l'outil (6) présente, dans sa position de travail opérant sur la pièce (5), une zone de travail (13) s'élevant au-dessus du plan de dépôt (4), dans lequel l'outil (6) et le plan de dépôt (4) sont réglables l'un par rapport à l'autre en direction verticale, en fonctionnement de travail, de façon motorisée sous la commande de capteurs, en fonction de la hauteur respective de la pièce (5) dans la zone d'action de l'outil (6) et ils peuvent être réglés l'un par rapport à l'autre dans une position qui correspond pratiquement à la hauteur respective de la pièce (5) dans la zone d'action de l'outil (6), **caractérisée en ce que** la partie de la zone de travail (13) s'élevant au-dessus de la pièce (6) présente une hauteur radiale, qui représente une fraction de la hauteur radiale de la région annulaire (7).

2. Procédé selon la revendication 1, **caractérisé en ce que** la région annulaire (7) est réalisée sous forme de région dentée (7).

3. Procédé selon la revendication 1 ou 2, **caractérisé en ce que** la hauteur radiale de la partie de la zone de travail s'élevant au-dessus de la pièce (6) se situe en limite inférieure à 2 mm et en limite supérieure à environ 10 mm.

4. Procédé selon l'une quelconque des revendications 1 à 3, **caractérisé en ce que** l'outil (6) est guidé de façon pivotante le long d'une voie de guidage ou de pivotement (31), qui présente un centre de pivotement situé dans la région du plan de dépôt de pièce (4).

5. Procédé selon la revendication 4, **caractérisé en ce que** la voie de pivotement (31) présente par rapport au centre de pivotement une distance polaire au moins proche du rayon (32) de l'outil (6) et **en ce que** le centre de pivotement se situe au moins approximativement au point d'attaque (30) de l'outil (6) sur la pièce (5).

6. Procédé selon la revendication 1, **caractérisé en ce que** le réglage de l'outil (6) en direction verticale est commandé en fonction de la vitesse d'avance de l'outil (5) détectée par des capteurs.
